# EUROPEAN PATENT SPECIFICATION

(11) **EP 2 116 160 B1**
(45) Date of publication and mention of the grant of the patent: **06.07.2011**
(21) Application number: 08008660.6
(22) Date of filing: 08.05.2008
(51) Int. Cl.: A47J 36/02, H05B 6/12

(54) **Induction cooking system and method for controlling the temperature inside a cooking utensil**
Induktionskochsystem und Verfahren zur Steuerung der Temperatur in Kochutensilien
Système de cuisson par induction et procédé pour contrôler la température à l'intérieur d'un ustensile de cuisine

(43) Date of publication of application: 11.11.2009
(73) Proprietor: Electrolux Home Products Corporation N.V., 1130 Brussel (BE)
(72) Inventor: Jeanneteau, Laurent, 60200 Compiègne (FR); Chung, Ha Min, 61100 Pesaro (IT); Rigolle, Thibaut, 47100 Forli (IT); Viroli, Alex, 47100 Forli (IT)
(74) Representative: Hochmuth, Jürgen

(56) References cited:
- EP-A- 1 841 289
- WO-A-03/045208
- WO-A-2008/054070
- US-A- 3 742 173
- US-A- 3 786 219
- US-A1- 2004 149 736

## Description

The present invention relates to an induction cooking system according to the preamble of claim 1 and a method for controlling the temperature inside a cooking utensil of said induction cooking system.

An induction cooking hob for inductively heating a food-containing cooking utensil comprises induction coils in a position adjacent to the cooking utensil. The induction coils, when energized, generate a magnetic flux or induction field which causes eddy currents in the surface of the cooking utensil, which results in Joule losses and hence, food heating.

A conventional induction cooking hob comprises a cooking top plate with up to five individual heating units, composed of separate induction coils, arranged and controlled separately for individual cooking operations.

An induction cooking hob which allows for random positioning of cooking utensils over the entire surface of a cooking top plate is known e.g. from WO 97/19298 A1. To this aim, the known hob comprises a plurality of induction coils distributed below the cooking top plate. The induction coils are arranged in a matrix configuration and are disposed in such a manner as to involve the entire surface of the cooking hob.

On these cooking hobs, known as high versatility hobs, the cooking utensil or utensils can be located at any desired point on them, depending on the space available, on the user's operating comfort, or even purely randomly. The induction coils, which have to be operated, depend on the position of the cooking utensil or utensils. Information relative to position of the cooking utensil hence constitutes a basic element for the operation of a cooking hob of the considered type. A pot detection system for determining the position of cooking utensils on the cooking hob is also known from WO 97/19298 A1.

Temperature and wattage or power of known high versatility induction cooking hobs are controlled by regulating the electric power input to the induction coils. Therefore known high versatility induction cooking hobs are provided with a plurality of control assemblies for controlling the energization, de-energization and variation of heating levels of the area covered by the cooking utensil, typically utilizing touch control systems and visual displays.

Usually a control panel is provided, including said information display and input means, such as touch screen or knobs, for setting various parameters related to the heating, e.g. the heating rate and the target temperature, thus enabling a user to select the amount of electrical power to be supplied to one or more cooking utensil.

One common design for a control panel is an array of touch pads and displays on the hob cooking plate itself. However, the utilization of the cooking top plate by displays and touch pads narrows the area available for actual cooking operations.

Moreover, the most expensive features of such an induction cooking hob beside of the heating elements are its associated control elements.

EP 1 841 289 A2 discloses an induction cooking system with an induction cooking hob having two induction coils and a plurality of cooking utensils for different cooking operations. The induction cooking hob comprises only one switch for activating said induction hob.

The present invention seeks to provide an induction cooking system, which obviates the need for a plurality of individual control elements associated with the types of induction cooking hobs hitherto known.

According to the present invention the induction coils are disposed as to involve the entire surface of a cooking top plate of the induction cooking hob in at least two separate arrays of different wattage beneath separate areas of the cooking top plate, wherein areas of different wattage are marked with different instructive indicia, and the cooking utensil comprises a marking which is an instructive marking related to the cooking operation which this cooking utensil is meant or can be used for.

The cooking utensils at least partially consist of at least one ferromagnetic material of a preselected Curie temperature and cooking utensils for different cooking operations have different Curie temperatures of their ferromagnetic materials.

The induction cooking hob according to the invention allows advantage to be taken of the fact that in everyday use of the equipment, it is not necessary for the user to have individual power regulation available for every cooking operation.

Thus, the control panel of the induction cooking hob can be constructed to minimize fabrication expenses while providing ease of operation, as there is no need to control the energization circuitry to thereby vary the energization of the induction hob, in particular of various induction coils.

In addition, the whole surface of the cooking top plate, including the edge portions, can be used for cooking operations when applying the present invention. Eventually, the hob may be reduced in size. Moreover, there is no need for specific transparent material to be used for cooking top plate, as no visual displays are necessary for a controlled cooking operation.

The method according to the present invention for controlling the temperature inside a cooking utensil during cooking operations comprises the steps of
a) generating an induction field,
b) in a first cooking operation having a corresponding first cooking temperature range
   b1) increasing the temperature inside a first cooking utensil which at least partially consists of at least one ferromagnetic material of a preselected first Curie temperature starting from a starting temperature below said first Curie temperature by placing the first cooking utensil in the induction field and heating the ferromagnetic material of the first cooking utensil by means of the induction field, wherein the first Curie temperature is unambigously related to the first cooking temperature range,
   b2) reducing the temperature inside the first cooking utensil when the temperature of the ferromagnetic material exceeds the first Curie temperature by stopping or reducing the heating of the ferromagnetic material due to the decrease or loss of ferromagnetic properties of the ferromagnetic material when exceeding of the first Curie temperature without decreasing or switching off the induction field until the temperature of the ferromagnetic material drops below the first Curie temperature,
   b3) after dropping of the temperature of the ferromagnetic material below the first Curie temperature increasing the temperature inside the first cooking utensil again by heating the ferromagnetic material of the first cooking utensil by means of the induction field,
   b4) whereby by repeating steps b1) to b3) the temperature inside the first cooking utensil is kept in the first cooking temperature range of the first cooking operation,
c) in at least one second cooking operation having a corresponding second cooking temperature range differing from said first cooking temperature range
   c1) increasing the temperature inside a second cooking utensil which at least partially consists of at least one ferromagnetic material of a preselected second Curie temperature starting from a starting temperature below said second Curie temperature by placing the second cooking utensil in the induction field and heating the ferromagnetic material of the second cooking utensil by means of the induction field, wherein the second Curie temperature is unambigously related to the second cooking temperature range and differs from said first Curie temperature,
   c2) reducing the temperature inside the second cooking utensil when the temperature of the ferromagnetic material exceeds the second Curie temperature by stopping or reducing the heating of the ferromagnetic material due to the decrease or loss of ferromagnetic properties of the ferromagnetic material when exceeding of the second Curie temperature without decreasing or switching off the induction field until the temperature of the ferromagnetic material drops below the second Curie temperature,
   c3) after dropping of the temperature of the ferromagnetic material below the second Curie temperature increasing the temperature inside the second cooking utensil again by heating the ferromagnetic material of the second cooking utensil by means of the induction field,
   c4) whereby by repeating steps c1) to c3) the temperature inside the second cooking utensil is kept in the second cooking temperature range of the second cooking operation,
wherein the induction cooking system with the cooking hob and at least one of the cooking utensils, as described above, is used.

According to the present invention, for varaible or even random positioning of cooking utensils on the cooking top plate of the induction cooking hob, the induction cooking hob comprises a plurality of induction coils, arranged in a matrix configuration and disposed as to involve the entire surface of the cooking top plate in at least two separate arrays of different wattage beneath separate areas of the cooking top plate. Preferably a (first) array of induction coils is designed for a low wattage of 0.1 to 1.0 watts per square cm and/or a (second) array of induction coils is designed for a high wattage of 4.0 to 12 watts per square cm. The induction cooking system may also include a warming or warming up zone, in particular formed by said first array.

It is envisaged that the induction cooking hob according to the invention including the two separate cooking areas of different wattage is sold for use with a plurality of cooking utensils for performing various cooking operations.

The cooking utensils may consist completely of or only comprise a member or part of the ferromagnetic material of a preselected Curie temperature, in particular a bottom member.

The preselected Curie temperature of a cooking utensil for a given cooking operation is usually selected from a temperature range correlating to the temperature range of said cooking operation, wherein preferably the Curie temperature corresponds to or is higher, in particular by 1 °C up to 30 °C, preferably at most 20 °C, than the highest temperature of said cooking temperature range of said cooking operation.

The preselected Curie temperature of at least one cooking utensil can be selected from a temperature range between 110 °C and 180 °C, in particular for a cooking operation having a cooking temperature range between 110 °C and 150 °C, e.g. boiling or simmering or steaming or stewing. Furthermore, the preselected Curie temperature of at least one cooking utensil can be selected from a temperature range between 250 °C and 290 °C, in particular for using said cooking utensil for a cooking operation having a cooking temperature range including the temperatures of 250 °C to 260 °C, e.g. browning, searing, frying or crusting. Furthermore, the preselected Curie temperature of at least one cooking utensil can be selected from a temperature range between 70 °C and 120 °C, in particular for using said cooking utensil for a cooking operation having a cooking temperature range between 70 °C and 90 °C, e.g. warming up sensible food, such as milk or baby food, or keeping warm food or liquid.

The numerical Curie temperature range specified allows proper regulation of the energy supply to common cooking utensil and cooking operation. In continuous use, the power level needed to maintain cooking (e.g. keeping on the boil, simmering) is most often low and can be provided by a low wattage cooking area. The high power level is useful during special, short duration preparation sessions (heating large quantities of liquid, getting a grill up to temperature).

Each of these cooking utensils is intended to perform a predetermined cooking operation at a target temperature corresponding to the preselected Curie temperature of said utensil. By choosing an appropriate cooking utensil with a desired Curie temperature for cooking specific foods, no overheating of those specific foods will occur, as the cooking utensil heats only up to the desired temperature range. Therefore, not only temperature control but also temperature limitation is achieved by use of the ferromagnetic material or member having a Curie point corresponding to the desired limit temperature.

According to a preferred embodiment control of the cooking temperature during a cooking operation in the corresponding cooking utensil takes place by generating a pre-given induction field by means of the induction cooking hob thereby heating the ferromagnetic material as long as the temperature in the ferromagnetic material is below the Curie temperature and thus increasing the temperature and when the temperature is above the Curie temperature not heating the ferromagnetic material any longer thus reducing the temperature again, until the temperature drops below the Curie temperature again, wherein preferably the induction field is not switched off and/or the temperature is not measured.

Thus, self-regulating induction allows the construction of the appliance to be simple and cost effective. Heating rate control is inherent to the wattage of selected array/heating unit. Temperature control is inherent to the material of a member of the cooking utensil. Hence, there is no need for costly thermal feedback controls and no possibility of overheating or underheating. The induction circuitry is less complicated and less costly, more compact and easier to use with the appliance than in traditional induction hobs.

An induction cooking system comprising an induction cooking hob comprising two separate areas of different wattage used in combination with a plurality of different types of cooking utensils for performing respectively a plurality of cooking operations at a preselected target temperature, allows for a controlled self-regulating cooking method without the need of complicated control assemblies and a plurality of control elements.

The induction cooking hob most preferably comprises a cooking utensil or pot detection system, in particular providing means for automatically activating a sub-array of induction coils, when a cooking utensil is placed on said sub-array such that the required coils are selected for the particular cooking utensil.

According to the present invention, any one or each of cooking utensils comprises a marking, indicia marking or markers which instruct or inform the user about which cooking operation this cooking utensil is meant or can be used for, i.e. an instructive marking related to a cooking operation. Thereby, the user can identify and choose from those utensils available the particular cooking utensil desired to be employed.

The marking is in particular formed by ribs, grooves, grooves filled with different material, dimples, blind bores, recesses or a roughened areas.Thus, the cooking utensils can be easily identified anytime and even after they have been in service for many years. Usually, sets of such cooking utensils are comprised of several of such utensils, each of which is provided with a different marking. Also, areas of different wattage or power of the induction cooking hob are marked with different markings to further ensure ease of identification.

The invention is in the following explained further by means of exemplary embodiments wherein reference is made also to the drawings.
FIG 1 is a perspective view showing a first embodiment of a cooking utensil according to the invention useful as boiling pot.
FIG 2 is a perspective view showing a second embodiment of a cooking utensil according to the invention useful as frying pan.
FIG 3 is a perspective view showing a third embodiment of a cooking utensil according to the invention useful as grilling pan.

An induction cooking system, particularly an induction cooking system adapted for domestic use, is provided comprising an induction cooking hob and a plurality of cooking utensils.

The induction cooking hob comprises a housing or casing. An electrically insulating cooking top plate of a suitable ceramic or other material, able to withstand high temperatures, is provided on the top surface of the casing.

For random positioning of cooking utensils, a plurality of induction coils is arranged in a matrix configuration beneath the cooking top plate. The induction coils are disposed in such a manner as to involve the entire surface of the cooking hob. The number of induction coils is large, preferably with a minimum of five sources per cooking utensil to be serviced. In this manner, a cooking utensil may be moved to any place on the cooking surface to make room for other cooking utensils and still retain the cooking desired. The supply of a large number of very small sources of energy ensures an even heating of both small and large cooking utensils and enables the heating of square or rectangular cooking utensils.

A power supply is held in the base of the casing under the induction coils, comprising a source of rectified AC for energizing each of the coils. A magnetic flux is generated by the induction coils if supplied with a high frequency alternating current by a generator, which sets the frequency and amplitude of the current as a function of the heating required.

According to the invention, the induction cooking hob is provided with a plurality of induction coils arranged in a matrix configuration in at least two separate arrays adapted to be loaded to different wattages, wherein the number of induction coils per array can be varied and chosen respectively.

One cooking area may be larger, the other smaller in order to enable the accommodation of different size cooking utensils.

Preferably, the arrays are arranged side to side of each other, corresponding to two separate cooking areas of the cooking top plate, forming two different heating units. Differently large quantities of energy are supplied to the arrays next to each other. Power regulation can take place in principle in two ways. On the one hand, the power regulation can be provided by changes of the frequency of the electric current flowing in the inductor resonant circuit. On the other hand, power regulation can be provided by changes of the duration and/or length and/or width of the current pulses submitted to the inductor.

Preferably, in one of the areas or in a first array the induction coils are designed to supply a high wattage while the other array is designed to supply only medium or low power.

According to an exemplary embodiment of the invention, a first heating unit is designed for a low wattage of of 0.1 to 1.0 Watts, in particular 0.3 to 0.5 Watts, per square cm. A second heating area is designed for a high wattage 4.0 to 12.0 Watts, in particular 6.0 to 9.5 Watts, per square cm.

A high wattage level is useful during special, short duration preparation sessions (boiling water, heating large quantities of liquid, getting a large grill up to temperature). In continuous use, the wattage level needed to maintain cooking (keeping on the boil, simmering) is most often low.

The low wattage heating area or further low wattage heating units may be provided, example given, for warming up cooked food or milk, or otherwise for thawing frozen goods.

Large cooking utensils can be used on the high wattage area, which can be very powerful and small ones an area of lower wattage, whose power remains sufficient in relation to the size of the load to be heated.

Circuitry is provided for electrically energizing the plurality of induction heating coils of a heating unit according to a their preselected wattage.

A simple control panel is provided on the front surface of the casing. A power source switch and a light emitting diode as a status indicator for displaying an on state or an off state of the power supply switch provided on a control panel may be all that is needed.

For safety reasons, it is desirable for the induction heating unit to operate only when there is a cooking utensil present on the cooking top plate. Detection of the presence of a cooking utensil on an induction cooking area can be achieved in a variety of ways by known pot detection systems. Such detection systems are disclosed, for example, in WO97/19298

When a cooking utensil, such as a pot or pan, is placed on the cooking top plate, a change in output signal from a sensor results, which is processed and used to switch on the heating unit. A further change in output signal from the sensor, when the cooking utensil is subsequently removed from the cooking surface of the heating unit, is used to effect automatic switching off of the heating unit. No input of the user is needed

An induction cooking hob comprising two separate areas of different wattage will operate with any non-magnetic, but electrically conductive utensil, such as an aluminum sau-cepan, but the electrical efficiency, i.e. the ratio of the power induced in the utensil to the total power consumed by the cooking apparatus, will be very low.

To improve the efficiency of an induction cooking system special cooking utensils are necessary made of materials or comprising a member made of materials that are ferromagnetic and have relatively high electrical resistance.

Cooking utensils made of ferromagnetic stainless steel (martensitic), enameled steel and cast iron are suitable for induction heating and result in adequate heating of the utensil.

To effect cooking in a utensil that is nonmagnetic and /or not electrically conductive a member, such as part or insert, of a ferromagnetic material, conveniently a suitable steel, surrounded by electrically conductive material, may be placed in the bottom of the utensil, in a manner known per se.

Such member made of a ferromagnetic alloy can be induction heated and constitutes the heating part of the utensil during a cooking operation.

Various constructions exist. For example, when the vessel is made of an aluminum alloy, the heating part may be a grid inserted into the bottom of the vessel. When the vessel is made of an austenitic stainless steel, the heating part is a plate made of a ferromagnetic alloy placed on the external wall of the bottom and either separated from the wall by an aluminum layer intended to distribute the heat well or joined to the bottom and covered on its external face with an austenitic stainless steel layer intended to ensure good corrosion resistance.

Conventionally, the ferromagnetic material used for the heating part is a ferromagnetic stainless steel. However, this material has the drawback of allowing induction heating up to temperatures that may be as high as 600 °C, when the cooking utensil is unintentionally left on an induction-heating unit. As a result, food may be burnt and utensils damaged.

In order to remedy this drawback, it is known to use ferromagnetic members made of a specific ferromagnetic material, typically an alloy, having a Curie temperature that is not too high, for example between 40 °C and 350 °C, so as to avoid overheating in a normal temperature-controlled induction cooking system.

The Curie temperature (or: Curie point) of a ferromagnetic material is the temperature value marking its transition between ferromagnetism and paramagnetism.

When the ferromagnetic material attains the Curie temperature it undergoes a solid-to-solid phase change transformation, which causes the material to become paramagnetic, i.e. effectively non-magnetic.

As long as the temperature of the member is below the Curie point, the alloy is ferromagnetic and can generate losses by induced currents, thereby heating the cooking utensil. As soon as the temperature of the member exceeds the Curie point, the alloy is no longer ferromagnetic and the heating stops or is drastically diminished, no more or much less heat is generated even though the induction coils or the hob are still operating. Thus, the ferromagnetic utensil or member thereof will effectively switch the cooking operation "off," even though the cooking hob is still "on." The switching off of the inductive heating by reaching th e Curie temperature usually happens gradually or continuously due to thermal hysteresis.

Heating by the ferromagnetic member resumes again when the temperature of the utensil drops below the Curie point. Thus, thermal regulation of the cooking operation is therefore obtained.

According to a preferred embodiment of the invention, the induction cooking hob is used in combination with a plurality of cooking utensils having a member, a part or insert, in particular at the bottom, constructed of a ferromagnetic material having a selected Curie temperature, such that when subjected to an induction field generated by the induction hob the ferromagnetic material of said utensil heats to a selected cooking temperature range.

By proper choice of materials, this temperature can be made to coincide with the optimum cooking temperature for a particular food or group of foods, so that a cooking utensil constructed of such a material can serve as the vehicle for practicing a controlled cooking method in combination with a cooking hob according to the invention.

It should be noted that the target cooking temperatures achievable in a cooking operation can be as little as 1 °C or as much as 30 °C less than the preselected Curie temperature, depending upon the material and size of the member, the food and the size of the utensil employed.

A plurality of cooking utensils can include any number of utensils having different, closely-controlled target temperatures.

A first embodiment relates to a cooking utensil intended for cooking food such as vegetables or fruit. For this type of food, the optimum cooking temperature is between 110 °C to 150 °C. With a cooking utensil the bottom of which is made of a ferromagnetic alloy whose Curie temperature between 110 °C and 180 °C, it is possible to heat food by induction up to approximately 110 °C to 150 °C.

For the browning, searing, frying or crusting of a food and for equivalent heating purposes, it is usually desirable to have the cooking utensil warm up very quickly to a certain optimum temperature at 250 °C to 260 °C. When the Curie temperature is of the order of 250 °C to 290 °C, it is possible for oil or fat to be efficiently heated up to approximately 250 °C to 260 °C.

A third embodiment relates to a cooking utensil intended for warming up sensible food, such as milk or baby food, or keeping warm food. For this type of cooking operation, the optimum cooking temperature is about 70 °C to 90 °C. Accordingly, the bottom of the cooking utensil is made from or has attached thereto a member having an effective Curie temperature of between 70 °C and 120 °C.

According to a preferred embodiment of the invention, the plurality of cooking utensils are provided with instructive markings to facilitate user recognition and selection thereof.

Such markings may take a variety of forms to convey information relative to the use of each specific cooking utensil. Preferably, the marking represent letters and/or numerals and/or symbols. In a most preferred way, the form cooking terms such as "BOIL", "FRY", "GRILL", "WARM-UP" or "SIMMER" or similar designations and descriptions related to the cooking process or operation to be performed with this cooking utensil.

Additionally the marking may comprise advertising marking, such as brand names, trademarks or symbols. While these markings may also enhance the appearance and thus the marketability of the cooking utensils, the main reason for adding these markings is for informational and identification purposes.

The marking may consist of grooves, ribs, striations, dimples, blind bores, recesses or one or more roughened areas. The markings preferably are in the shape of raised ribs arranged substantially across the bottom plate of the cooking utensils. In a preferred embodiment of the marking, the cooking utensils have ribs resembling the series of supporting ribs known from grilling pans that help to drain fat and liquid away from the food being cooked, lest it reaches the level of the supporting ribs and simmer rather than sear the food surface. These ribs typically will consist of the material of the cooking utensil. Otherwise, it may be sometimes useful to effect this marking by means of grooves in the bottom plate. It is considered however that grooves might tend to collect debris and it is proposed to fill said grooves with an optical different material to make them clearly visible.

The preferred location of the marking on the bottom plate of the utensil promotes the maximum legibility of the indicia markings in use, whereas a preferred location of the marking outwardly of the sidewall of the utensil will permit reading of the information while utensils are stored in stacks in a storage place.

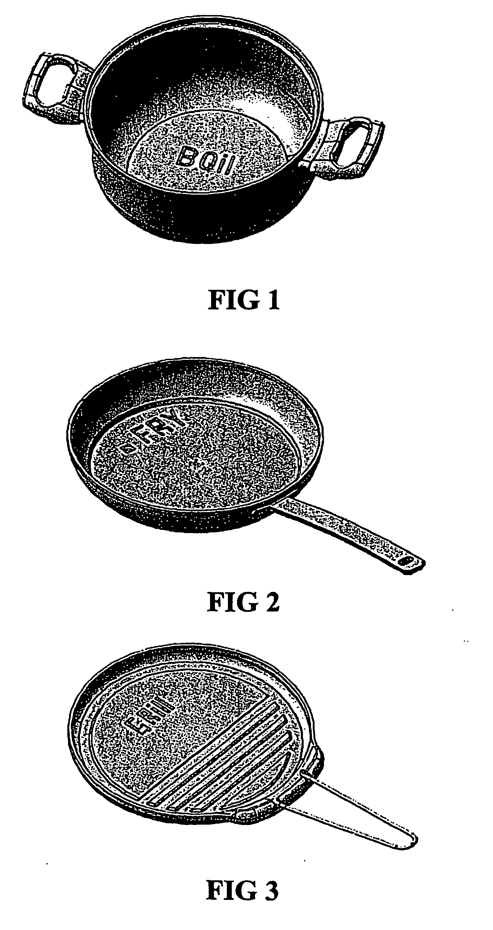

FIG 1 shows a boiling pot requiring heat from a low wattage area of the induction cooking hob. FIG 2 and 3 show two pans requiring heat from a high wattage area of the cooking hob.

In a preferred embodiment the cooking hob top plate areas are marked with indicia marking too, to denote the cooking areas of different wattage. Particularly preferred are indicia marking similar to the markings of the cooking utensil assembly to ensure proper use thereof.

The present invention allows for a controlled method of a cooking operation wherein a minimum of customer adjustment is necessary.

If the induction cooking hob according to the invention is turned on, a status indicator, such as an LED, may flash for a predetermined period of time, to alert a user that-the hob is in an operational mode.

But due to a pot detection system associated with the cooking hob the induction heating unit will not operate unless a proper cooking utensil is placed on one of the cooking areas; no heat nor scattering field is generated from the cooking area.

For performing a specific cooking operation, the user the user selects an adequate cooking utensil and places the cooking utensil on the cooking top plate according to the instructive indicia marking on the cooking utensil itself and on the cooking top plate.

Example given, the pot shown in FIG 1 is of the type, which will require heating only by a low wattage element, as it is a boiling pot. As will be seen in FIG 1 the bottom of the utensil has an indicia marking which in combination with an indicia marking on the cooking areas instructs the user to place such utensil on the low wattage area of the cooking top plate.

Without further input of the user, power is applied to the selected low wattage area and the member of the cooking utensil heats to its Curie point, e.g. of 120 °C. The water or food contained in cooking utensil is heated and the heat is transferred to the food-containing vessel. Once the Curie temperature is reached, the metal alloy of the member transforms from magnetic to non-magnetic and the induction heating phenomenon halts. Hence, the temperature of the water or food cannot boil or burn due to the fact that the temperature of the utensil stays below 100 °C. After the temperature of the alloy of the member cools to a level below its Curie temperature, the member transforms from non-magnetic to magnetic and, once again, begins to heat, and the cycle of heating and cooling continues without the need for elaborate electrical controls and user input. Rather, in a simple, but advantageous embodiment the induction heating can stay turned-on all the time and does not need to be controlled or switched in an electronic temperature control system using temperature measurements and controling the temperature to a set value as is the case in the prior art.

Thus, the cooking utensil maintains a relatively constant temperature at about its effective operational temperature.

For browning, searing, frying or crusting of a food and for equivalent heating purposes, it is usually desirable to have the cooking utensil warm up very quickly to a certain optimum temperature, then remain at approximately that temperature for the balance of the cooking period.

The pots shown in FIG 2 and 3 are of the type, which will usually require heating by a high wattage element, e.g. a frying pan. Accordingly, they may comprise indicia markings that instruct the user to select the high wattage cooking area.

Thus, this cooking utensil again maintains a relatively constant temperature at about its own effective operational temperature.

If a cooking utensil is removed from the cooking area during the cooking operation, the pot detection system will automatically terminate heating and a status display indicator may flash.

As the heating rate is controlled by the wattage of the selected cooking area and the target temperature is controlled by the preselected Curie temperature of the cooking utensil a minimum of controls and user input is needed to provide a controlled method of cooking.

It should be noted here that during the time period wherein the ferromagnetic member attains a temperature above its Curie temperature, the induction heating unit continues to emit inductive fields. Since these fields can no longer bundle themselves in the ferromagnetic member, an expanded scattering field develops. Now if a magnetizable material comes unintentionally into the range of this scattering field, it will be warmed up, which may be dangerous. Yet, according to the controlled wattage matched with the desired target temperature of the cooking utensil, such time periods will be very limited.

Other improvements, modifications and embodiments will become apparent to one of ordinary skill in the art upon review of this disclosure. Such improvements, modifications and embodiments are considered to be within the scope of this invention as defined by the following claims.

## Claims

1. An induction cooking system
a) comprising at least one induction cooking hob with a plurality of induction coils arranged in a matrix configuration, and
b) further comprising a plurality of cooking utensils for different cooking operations, for instance frying, boiling, grilling or warming,
c) wherein the cooking utensils at least partially consist of at least one ferromagnetic material of a preselected Curie temperature and wherein cooking utensils for different cooking operations differ in the Curie temperatures of their ferromagnetic materials,
**characterized in, that**
the induction coils are disposed as to involve the entire surface of a cooking top plate of the induction cooking hob in at least two separate arrays of different wattage beneath separate areas of the cooking top plate, wherein areas of different wattage are marked with different instructive indicia, and the cooking utensil comprises a marking ("BOIL"; "FRY"; "GRILL") which is an instructive marking related to the cooking operation which this cooking utensil is meant or can be used for.

2. An induction cooking system according to claim 1, wherein a first array is designed for a low wattage or power of 0.1 to 1.0 Watts, in particular 0.3 to 0.5 Watts, per square cm and/or wherein a second array is designed for a high wattage of 4.0 to 12.0 Watts, in particular 6.0 to 9.5 Watts, per square cm.

3. An induction cooking system according to claim 1 or 2,
wherein the induction cooking hob comprises a warming or warming up zone, in particular formed by said first array.

4. An induction cooking system according to any of the preceding claims, wherein the cooking utensils comprise a member of a ferromagnetic material of a preselected Curie temperature, in particular a bottom member.

5. An induction cooking system according to any of the preceding claims, wherein the preselected Curie temperature of a cooking utensil for a given cooking operation is selected from a Curie temperature range correlating to the cooking temperature range of said cooking operation, wherein preferably the Curie temperature corresponds to or is higher, in particular by 1 °C up to 30 °C, than the highest temperature of said cooking temperature range of said cooking operation.

6. An induction cooking system according to any of the preceding claims,
a) wherein the preselected Curie temperature of at least one cooking utensil is selected from a temperature range between 110 °C and 180 °C, in particular for a cooking operation having a cooking temperature range between 110 °C and 150 °C, e.g. boiling or simmering or steaming or stewing,
and/or
b) wherein the preselected Curie temperature of at least one cooking utensil is selected from a temperature range between 250 °C and 290 °C, in particular for using said cooking utensil for a cooking operation having a cooking temperature range including the temperatures of 250 °C to 260 °C, e.g. browning, searing, frying or crusting,
and/or
c) wherein the preselected Curie temperature of at least one cooking utensil is selected from a temperature range between 70 °C and 120 °C, in particular for using said cooking utensil for a cooking operation having a cooking temperature range between 70 °C and 90 °C, e.g. warming up sensible food, such as milk or baby food, or keeping warm food or liquid.

7. An induction cooking system according to any of the preceding claims, wherein the induction cooking hob comprises a cooking utensil detection system.

8. An induction cooking system according to any of the preceding claims, wherein a control of the temperature during a cooking operation in the corresponding cooking utensil takes place by generating a pre-given induction field by means of the induction cooking hob heating the ferromagnetic material as long as the temperature in the ferromagnetic material is below the Curie temperature and thus increasing the temperature and when the temperature is above the Curie temperature not heating the ferromagnetic material any longer thus reducing the temperature again, until the temperature drops below the Curie temperature again, wherein preferably the induction field is not switched off and/or the temperature is not measured.

9. An induction cooking system according to any of the preceding claims, wherein any one or each of the cooking utensils comprises a marking, which is an instructive marking related to the cooking operation which this cooking utensil is meant or can be used for, wherein in particular the marking is formed by ribs, grooves, grooves filled with different material, dimples, blind bo-res, recesses or a roughened areas.

10. Method for controlling the temperature inside a cooking utensil during cooking operations comprising the steps of
a) generating an induction field,
b) in a first cooking operation having a corresponding first cooking temperature range
b1) increasing the temperature inside a first cooking utensil which at least partially consists of at least one ferromagnetic material of a preselected first Curie temperature starting from a starting temperature below said first Curie temperature by placing the first cooking utensil in the induction field and heating the ferromagnetic material of the first cooking utensil by means of the induction field, wherein the first Curie temperature is unambigously related to the first cooking temperature range,
b2) reducing the temperature inside the first cooking utensil when the temperature of the ferromagnetic material exceeds the first Curie temperature by stopping or reducing the heating of the ferromagnetic material due to the decrease or loss of ferromagnetic properties of the ferromagnetic material when exceeding of the first Curie temperature without decreasing or switching off the induction field until the temperature of the ferromagnetic material drops below the first Curie temperature,
b3) after dropping of the temperature of the ferromagnetic material below the first Curie temperature increasing the temperature inside the first cooking utensil again by heating the ferromagnetic material of the first cooking utensil by means of the induction field,
b4) whereby by repeating steps b1) to b3) the temperature inside the first cooking utensil is kept in the first cooking temperature range of the first cooking operation,
c) in at least one second cooking operation having a corresponding second cooking temperature range differing from said first cooking temperature range
c1) increasing the temperature inside a second cooking utensil which at least partially consists of at least one ferromagnetic material of a preselected second Curie temperature starting from a starting temperature below said second Curie temperature by placing the second cooking utensil in the induction field and heating the ferromagnetic material of the second cooking utensil by means of the induction field, wherein the second Curie temperature is unambigously related to the second cooking temperature range and differs from said first Curie temperature,
c2) reducing the temperature inside the second cooking utensil when the temperature of the ferromagnetic material exceeds the second Curie temperature by stopping or reducing the heating of the ferromagnetic material due to the decrease or lose of ferromagnetic properties of the ferromagnetic material when exceeding of the second Curie temperature without decreasing or switching off the induction field until the temperature of the ferromagnetic material drops below the.second Curie temperature,
c3) after drooping of the temperature of the ferromagnetic material below the second curie temperature increasing the temperature inside the second cooking utensil again by heating the ferromagnetic material of the second cooking utensil by means of the induction field,
c4) whereby by repeating steps c1) to c3) the temperature inside the second cooking utensil is kept in the second cooking temperature range of the second cooking operation.
wherein the induction cooking system with the cooking hob and at least one of the cooking utensils according to one of claims 1 to 9 is used.

## Patentansprüche

1. Induktionskochsystem, das
a) mindestens ein Induktionskochfeld mit einer Mehrzahl von Induktionsspulen enthält, die in einer Matrixkonfiguration angeordnet sind, und
b) ferner eine Mehrzahl von Kochutensilien für unterschiedliche Kochvorgänge umfasst, beispielsweise Braten, Kochen, Grillen oder Aufwärmen,
c) wobei die Kochutensilien wenigstens teilweise aus mindestens einem ferromagnetischen Material mit einer bestimmten Curie-Temperatur bestehen und wobei sich die Kochutensilien für unterschiedliche Kochvorgänge in den Curie-Temperaturen ihrer ferromagnetischen Materialien unterscheiden,
**dadurch gekennzeichnet, dass**
die Induktionsspulen so angeordnet sind, dass sie die gesamte Oberfläche einer Kochplatte des Induktionskochfeldes in wenigstens zwei getrennten Feldern unterschiedlicher Wattzahl unterhalb getrennter Bereiche der Kochplatte erfassen, wobei Bereiche unterschiedlicher Wattzahl mit unterschiedlichen Bezeichnungen markiert sind und das Kochutensil eine Markierung ("KOCHEN"; "BRATEN"; "GRILLEN") umfasst, bei der es sich um einen Hinweis auf den Kochvorgang handelt, für den dieses Kochutensil vorgesehen ist bzw. verwendet werden kann.

2. Induktionskochsystem gemäß Anspruch 1, wobei ein erstes Feld für eine geringe Wattzahl oder Leistung von 0,1 bis 1,0 Watt, insbesondere 0,3 bis 0,5 Watt pro Quadratzentimeter ausgeführt ist und/oder wobei ein zweites Feld für eine hohe Wattzahl von 4,0 bis 12,0 Watt, insbesondere von 6,0 bis 9,5 Watt pro Quadratzentimeter ausgeführt ist.

3. Induktionskochsystem gemäß Anspruch 1 oder 2, wobei das Induktionskochfeld eine Warmhalte- oder Erwärmungszone aufweist, die insbesondere von dem ersten Feld gebildet wird.

4. Induktionskochsystem gemäß einem der vorangehenden Ansprüche, wobei die Kochutensilien ein Element aus einem ferromagnetischen Material einer bestimmten Curie-Temperatur umfassen, insbesondere ein Bodenelement.

5. Induktionskochsystem gemäß einem der vorangehenden Ansprüche, wobei die bestimmte Curie-Temperatur eines Kochutensils für einen bestimmten Kochvorgang aus einem Bereich von Curie-Temperaturen in Entsprechung zum Bereich der Kochtemperaturen des Kochvorgangs ausgewählt ist, wobei die Curie-Temperatur vorzugsweise der höchsten Temperatur des Kochtemperaturbereichs des Kochvorgangs entspricht oder höher als diese ist, insbesondere um 1°C bis 30°C höher.

6. Induktionskochsystem gemäß einem der vorangehenden Ansprüche,
a) wobei die bestimmte Curie-Temperatur mindestens eines Kochutensils aus einem Temperaturbereich zwischen 110°C und 180°C ausgewählt ist, insbesondere für einen Kochvorgang in einem Kochtemperaturbereich zwischen 110°C und 150°C, z. B. Kochen oder Dünsten oder Dämpfen oder Schmoren,
und/oder
b) wobei die bestimmte Curie-Temperatur mindestens eines Kochutensils aus einem Temperaturbereich zwischen 250°C und 290°C ausgewählt ist, insbesondere zur Verwendung des Kochutensils für einen Kochvorgang in einem Kochtemperaturbereich einschließlich der Temperaturen 250°C bis 260°C, z. B. Anrösten, Anbraten, Braten oder Überkrusten,
und/oder
c) wobei die bestimmte Curie-Temperatur mindestens eines Kochutensils aus einem Temperaturbereich zwischen 70°C und 120°C ausgewählt ist, insbesondere zur Verwendung des Kochutensils für einen Kochvorgang in einem Temperaturbereich zwischen 70°C und 90°C, z. B. zum Aufwärmen empfindlicher Lebensmittel, wie beispielsweise Milch oder Babynahrung, oder zum Warmhalten von Nahrungsmitteln oder Flüssigkeiten.

7. Induktionskochsystem gemäß einem der vorangehenden Ansprüche, wobei das Induktionskochfeld ein Kochutensilien-Detektionssystem umfasst.

8. Induktionskochsystem gemäß einem der vorangehenden Ansprüche, wobei eine Regelung der Temperatur während eines Kochvorgangs im entsprechenden Kochutensil durch die Generierung eines vorgegebenen Induktionsfeldes stattfindet, indem das Induktionskochfeld das ferromagnetische Material erhitzt, solange die Temperatur im ferromagnetischen Material unterhalb der Curie-Temperatur liegt, und damit die Temperatur erhöht, und wenn die Temperatur über der Curie-Temperatur liegt, das ferromagnetische Material nicht mehr erhitzt wird und **dadurch** die Temperatur wieder reduziert wird, bis die Temperatur wieder unter die Curie-Temperatur abfällt, wobei das Induktionsfeld vorzugsweise nicht ausgeschaltet wird und/oder die Temperatur nicht gemessen wird.

9. Induktionskochsystem gemäß einem der vorangehenden Ansprüche, wobei einzelne oder alle der Kochutensilien eine Markierung umfassen, bei der es sich um einen Hinweis auf den Kochvorgang handelt, für den dieses Kochutensil vorgesehen ist oder verwendet werden kann, wobei die Markierung insbesondere durch Riffel, Rillen, mit unterschiedlichen Materialien ausgefüllte Rillen, Vertiefungen, Blindbohrungen, Aussparungen oder aufgeraute Flächen gebildet ist.

10. Verfahren zur Regelung der Temperatur innerhalb eines Kochutensils während Kochvorgängen, das folgende Schritte umfasst:
a) Generieren eines Induktionsfeldes,
b) Vorhandensein eines entsprechenden ersten Temperaturbereichs in einem ersten Kochvorgang,
b1) Erhöhen der Temperatur in einem ersten Kochutensil, das zumindest teilweise aus wenigstens einem ferromagnetischen Material einer bestimmten ersten Curie-Temperatur besteht, beginnend bei einer Ausgangstemperatur unter der ersten Curie-Temperatur, durch Platzieren des ersten Kochutensils im Induktionsfeld und Erhitzen des ferromagnetischen Materials des ersten Kochutensils mittels des Induktionsfelds, wobei die erste Curie-Temperatur eindeutig auf den ersten Kochtemperaturbereich bezogen ist,
b2) Reduzieren der Temperatur im ersten Kochutensil, wenn die Temperatur des ferromagnetischen Materials die erste Curie-Temperatur überschreitet, durch Anhalten oder Reduzieren des Erhitzens des ferromagnetischen Materials infolge der Verringerung oder des Verlusts ferromagnetischer Eigenschaften des ferromagnetischen Materials, wenn die erste Curie-Temperatur überschritten wird, ohne das Induktionsfeld herabzusetzen oder auszuschalten, bis die Temperatur des ferromagneticschen Materials unter die erste Curie-Temperatur fällt,
b3) nach dem Abfallen der Temperatur des ferromagnetischen Materials unter die erste Curie-Temperatur das erneute Erhöhen der Temperatur im ersten Kochutensil durch Erhitzen des ferromagnetischen Materials des ersten Kochutensils durch das Induktionsfeld,
b4) wobei durch die Wiederholung von Schritt b1) bis b3) die Temperatur im ersten Kochutensil im ersten Kochtemperaturbereich des ersten Kochvorgangs gehalten wird,
c) wenigstens einen zweiten Kochvorgang mit einem entsprechenden zweiten Kochtemperaturbereich, der sich vom ersten Kochtemperaturbereich unterscheidet,
c1) Erhöhen der Temperatur in einem zweiten Kochutensil, das zumindest teilweise aus wenigstens einem ferromagnetischen Material einer bestimmten zweiten Curie-Temperatur besteht, beginnend mit einer Ausgangstemperatur unter der zweiten Curie-Temperatur durch Platzieren des zweiten Kochutensils im Induktionsfeld und Erhitzen des ferromagnetischen Materials des zweiten Kochutensils mittels des Induktionsfelds, wobei die zweite Curie-Temperatur eindeutig auf den zweiten Kochtemperaturbereich bezogen ist und sich von der ersten Curie-Temperatur unterscheidet,
c2) Reduzieren der Temperatur im zweiten Kochutensil, wenn die Temperatur des ferromagnetischen Materials die zweite Curie-Temperatur überschreitet, durch Anhalten oder Reduzieren des Erhitzens des ferromagnetischen Materials infolge der Verringerung oder des Verlusts ferromagnetischer Eigenschaften des ferromagnetischen Materials, wenn die zweite Curie-Temperatur überschritten wird, ohne das Induktionsfeld herabzusetzen oder auszuschalten, bis die Temperatur des ferromagnetischen Materials unter die zweite Curie-Temperatur fällt,
c3) nach dem Abfallen der Temperatur des ferromagnetischen Materials unter die zweite Curie-Temperatur das erneute Erhöhen der Temperatur im zweiten Kochutensil durch Erhitzen des ferromagnetischen Materials des zweiten Kochutensils durch das Induktionsfeld,
c4) wobei durch die Wiederholung von Schritt c1) bis c3) die Temperatur im zweiten Kochutensil im zweiten Kochtemperaturbereich des zweiten Kochvorgangs gehalten wird,
wofür das Induktionskochsystem mit dem Kochfeld und mindestens einem der Kochutensilien gemäß einem der Ansprüche 1 bis 9 verwendet wird.

## Revendications

1. Système de cuisson par induction
a) comprenant au moins une table de cuisson par induction avec une pluralité de bobines d'induction agencées selon une configuration de matrice, et
b) comprenant en outre une pluralité d'ustensiles de cuisine pour différentes opérations de cuisson, par exemple frire, bouillir, griller ou chauffer,
c) où les ustensiles de cuisson consistent au moins partiellement en au moins un matériau ferromagnétique d'une température de Curie présélectionnée, et où les ustensiles de cuisson pour les différentes opérations de cuisson diffèrent en températures de Curie de leurs matériaux ferromagnétiques,
**caractérisé en ce que** les bobines d'induction sont disposées de manière à impliquer la surface entière d'une plaque supérieure de cuisson de la table de cuisson par induction dans au moins deux rangées séparées de différentes puissances restituées en dessous de zones séparées de la plaque supérieure de cuisson, où les zones de puissances restituées différentes sont marquées par un indice d'instruction différent, et l'ustensile de cuisson comprend un marquage ("BOUILLIR"; "FRIRE"; "GRILLER") qui est un marquage d'instructions se rapportant à l'opération de cuisson pour laquelle cet ustensile de cuisson est prévu ou peut être utilisé.

2. Système de cuisson par induction selon la revendication 1, dans lequel une première rangée est conçue pour une puissance restituée basse ou une puissance de 0,1 à 1,0 Watts, en particulier de 0,3 à 0,5 Watts, par cm carré et/ou où une seconde rangée est conçue pour une puissance restituée élevée de 4,0 à 12,0 Watts, en particulier de 6,0 à 9,5 Watts, par cm carré.

3. Système de cuisson par induction selon la revendication 1 ou 2, dans lequel la table de cuisson par induction comprend une zone de chauffage ou d'échauffement, en particulier formée par ladite première rangée.

4. Système de cuisson par induction selon l'une quelconque des revendications précédentes, dans lequel les ustensiles de cuisson comprennent un membre d'un matériau ferromagnétique d'une température de Curie présélectionnée, en particulier un élément inférieur.

5. Système de cuisson par induction selon l'une quelconque des revendications précédentes, dans lequel la température de Curie présélectionnée d'un ustensile de cuisson pour une opération de cuisson donnée est sélectionnée dans une plage de température de Curie en corrélation avec la plage de température de cuisson de ladite opération de cuisson, où de préférence la température de Curie correspond à ou est plus élevée, en particulier de 1°C jusqu'à 30°C, que la température la plus élevée de ladite plage de température de cuisson de ladite opération de cuisson.

6. Système de cuisson par induction selon l'une quelconque des revendications précédentes,
a) dans lequel la température de Curie présélectionnée d'au moins un ustensile de cuisson est sélectionnée dans une plage de température entre 110°C et 180°C, en particulier pour une opération de cuisson ayant une plage de température de cuisson entre 110°C et 150°C, par exemple bouillir ou mijoter ou ébouillanter ou cuire à l'étouffée, et/ou
b) où la température de Curie présélectionnée d'au moins un ustensile de cuisson est sélectionnée dans une plage de température entre 250°C et 290°C, en particulier pour utiliser ledit ustensile de cuisson pour une opération de cuisson ayant une plage de température de cuisson incluant les températures de 250°C à 260°C, par exemple le brunissage, le brûlage, la fritture ou la formation d'une croute, et/ou
c) où la température de Curie présélectionnée d'au moins un ustensile de cuisson est sélectionnée dans une plage de température entre 70°C et 120°C, en particulier pour utiliser ledit ustensile de cuisson pour une opération de cuisson ayant une plage de température de cuisson entre 70°C et 90°C, par exemple l'échauffement d'un aliment sensible, comme le lait ou un aliment pour bébé ou le maintien au chaud d'un aliment ou d'un liquide.

7. Système de cuisson par induction selon l'une quelconque des revendications précédentes, dans lequel la table de cuisson par induction comprend un système de détection d'ustensile de cuisson.

8. Système de cuisson par induction selon l'une quelconque des revendications précédentes, dans lequel une commande de la température durant une opération de cuisson dans l'ustensile de cuisson correspondant a lieu en générant un champ d'induction prédéterminé au moyen de la table de cuisson par induction chauffant le matériau ferromagnétique aussi longtemps que la température du matériau ferromagnétique est en dessous de la température de Curie et en augmentant ainsi la température, et lorsque la température est au-dessus de la température de Curie ne chauffant plus le matériau ferromagnétique en réduisant ainsi la température à nouveau, jusqu'à ce que la température tombe à nouveau en dessous de la température de Curie, où de préférence le champ d'induction n'est pas commuté hors service et/ou la température n'est pas mesurée.

9. Système de cuisson par induction selon l'une quelconque des revendications précédentes, dans lequel l'un quelconque ou chaque ustensile de cuisson comprend un marquage, qui est un marquage d'instruction lié à l'opération de cuisson pour laquelle cet ustensile de cuisson est prévu ou peut être utilisé, où en particulier le marquage est formé par des nervures, rainures, rainures remplies d'un matériau différent, bosses, trous borgnes, évidements ou des zones rendues rugueuses.

10. Procédé pour contrôler la température à l'intérieur d'un ustensile de cuisine durant des opérations de cuisson comprenant les étapes de
a) produire un champ d'induction,
b) dans une première opération de cuisson ayant une première plage de température de cuisson correspondante,
b1) augmenter la température à l'intérieur d'un premier ustensile de cuisson qui consiste au moins partiellement en au moins un matériau ferromagnétique d'une première température de Curie présélectionnée commençant à une température de départ en dessous de ladite première température de Curie en plaçant le premier ustensile de cuisson dans le champ d'induction et en chauffant le matériau ferromagnétique du premier ustensile de cuisson au moyen du champ d'induction, où la première température de Curie est liée d'une manière non ambiguë à la première plage de température de cuisson,
b2) réduire la température à l'intérieur du premier ustensile de cuisson lorsque la température du matériau ferromagnétique dépasse la première température de Curie en arrêtant ou en réduisant l'échauffement du matériau ferromagnétique par suite d'une diminution ou d'une perte de propriétés ferromagnétiques du matériau ferromagnétique lors d'un dépassement de la première température de Curie sans réduire ou commuter hors service le champ d'induction jusqu'à ce que la température du matériau ferromagnétique tombe en dessous de la première température de Curie,
b3) après la descente de la température du matériau ferromagnétique en dessous de la première température de Curie, augmenter la température à l'intérieur du premier ustensile de cuisson à nouveau en chauffant le matériau ferromagnétique du premier ustensile de cuisson au moyen du champ d'induction,
b4) où en répétant les étapes b1) à b3), la température à l'intérieur du premier ustensile de cuisson est maintenue dans la première plage de température de cuisson de la première opération de cuisson,
c) lors d'au moins une deuxième opération de cuisson ayant une deuxième plage de température de cuisson correspondante différente de ladite première plage de température de cuisson
c1) augmenter la température à l'intérieur d'un deuxième ustensile de cuisson qui consiste au moins partiellement en au moins un matériau ferromagnétique d'une deuxième température de Curie présélectionnée commençant à partir d'une température de départ en dessous de ladite deuxième température de Curie en plaçant le deuxième ustensile de cuisson dans le champ d'induction et en chauffant le matériau ferromagnétique du deuxième ustensile de cuisson au moyen du champ d'induction, où la deuxième température de Curie est liée de manière non ambiguë à la deuxième plage de température de cuisson et diffère de ladite première température de curie,
c2) réduire la température à l'intérieur du deuxième ustensile de cuisson lorsque la température du matériau ferromagnétique dépasse la deuxième température de Curie en arrêtant ou réduisant l'échauffement du matériau ferromagnétique par suite d'une diminution ou d'une perte de propriétés ferromagnétiques du matériau ferromagnétique lors d'un dépassement de la deuxième température de Curie sans diminuer ou commuter hors service le champ d'induction jusqu'à ce que la température du matériau ferromagnétique tombe en dessous de la deuxième température de Curie,
c3) après la chute de la température du matériau ferromagnétique en dessous de la deuxième température de Curie, augmenter la température à l'intérieur du deuxième ustensile de cuisson à nouveau en chauffant le matériau ferromagnétique du deuxième ustensile de cuisson au moyen du champ d'induction,
c4) où en répétant les étapes c1) à c3), la température à l'intérieur du deuxième ustensile de cuisson est maintenue dans la deuxième plage de température de cuisson de la deuxième opération de cuisson,
où le système de cuisson par induction avec la table de cuisson et au moins un des ustensiles de cuisson selon l'une des revendications 1 à 9 est utilisé.
